(19) Europäisches Patentamt
European Patent Office
Office européen des brevets

(11) Veröffentlichungsnummer: **0 044 805**
**A2**

(12) # EUROPÄISCHE PATENTANMELDUNG

(21) Anmeldenummer: 81810202.2

(22) Anmeldetag: 27.05.81

(51) Int. Cl.³: C 09 B 67/26
C 09 B 69/04, D 21 H 3/80
D 06 P 1/10

(30) Priorität: 04.07.80 CH 5145/80

(43) Veröffentlichungstag der Anmeldung: 27.01.82 Patentblatt 82/4

(84) Benannte Vertragsstaaten: CH DE FR GB LI SE

(71) Anmelder: CIBA-GEIGY AG
Patentabteilung Postfach
CH-4002 Basel(CH)

(72) Erfinder: Lacroix, Roger, Dr.
Rue Vauban 24
F-68300 Village-Neuf(FR)

(54) **Flüssigformulierungen von kupferhaltigen Farbstoffen.**

(57) Flüssigformulierungen kupferhaltiger Farbstoffe, enthaltend einen Farbstoff der in Form der freien Säure der Formel

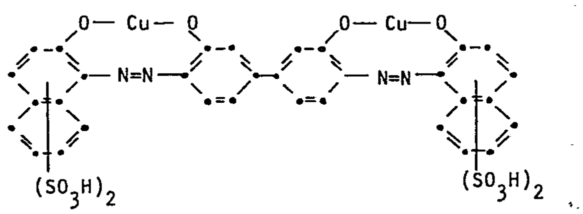

(1)

entspricht, gelöst in Wasser, und soviel Alkyl- bzw. Alkanolamin, um einen pH-Wert von 6,5 bis 8,5 der Flüssigformulierung einzulstellen, wobie der Farbstoff als Alkyl- oder Alkanolaminsalz vorliegt. Diese neuen Flüssigformulierungen stellen konzentrierte, echte Lösungen dar, die über mehrere Monate bei Temperaturen zwischen ca. −10° C und +60° C lagerstabil und in jedem Verhältnis mit kaltem und warmem Wasser mischbar sind. Sie eignen sich insbesondere zum Färben und Bedrucken von Papier, einschliesslich Halbkartons und Kartons, wobei man diese Materialien z.B. in der Masse, durch Streichen oder durch tauchen färben kann.

EP 0 044 805 A2

Croydon Printing Company Ltd.

CIBA-GEIGY AG
Basel (Schweiz)

1-12946/-

Flüssigformulierungen von kupferhaltigen Farbstoffen.

Die Erfindung betrifft neue Flüssigformulierungen von kupferhaltigen Farbstoffen, Verfahren zu deren Herstellung und deren Verwendung zum Färben und Bedrucken von Cellulosematerialien und insbesondere Papier.

Die Verwendung von wasserlöslichen Farbstoffen in der Form konzentrierter wässriger Lösungen, die in der Technik oft als "flüssige Farbstoffe" bezeichnet werden, hat in den letzten Jahren für das Färben von Papier und Textilien technische Bedeutung erlangt. Die Hauptvorteile solcher "flüssigen Farbstoffe" gegenüber pulvrigen Farbstoffen sind die Vermeidung des Staubens bei der Handhabung und die Leichtigkeit und Geschwindigkeit, mit der die "flüssigen Farbstoffe" abgemessen werden können.

Im Idealfall besteht ein "flüssiger Farbstoff" aus einer wässrigen Lösung des Farbstoffs, wobei die Probleme der Beseitigung oder Rückgewinnung, die bei organischen Lösungsmittel enthaltenden Lösungen anstelle von Wasser auftreten, vermieden werden. Oft aber reicht die Löslichkeit des Farbstoffes in Wasser nicht aus, um wässrige Lösungen der für eine Verwendung als "flüssige Farbstoffe" gewünschten Konzentration, d.h. wenigstens 15 Gew.-% zu ergeben.

Die deutsche Offenlegungsschrift 1 794 250 beschreibt z.B. Flüssigformulierungen, welche u.a. kupferhaltige Disazofarbstoffe gelöst in einem Lösungsmittelgemisch aus Monopropanolamin oder einem Aminothiol und Wasser enthalten. Die in dieser Offenlegungsschrift beschriebenen Flüssigformulierungen enthalten den Farbstoff in Form von anorganischen Salzen, z.B. Alkalisalzen und insbesondere Natriumsalze in Mengen von nur ca. 11 Gew.-%, berechnet auf das gesamte Präparat.

Zum Beispiel kann man mit dem kupferhaltigen Disazofarbstoff der Formel

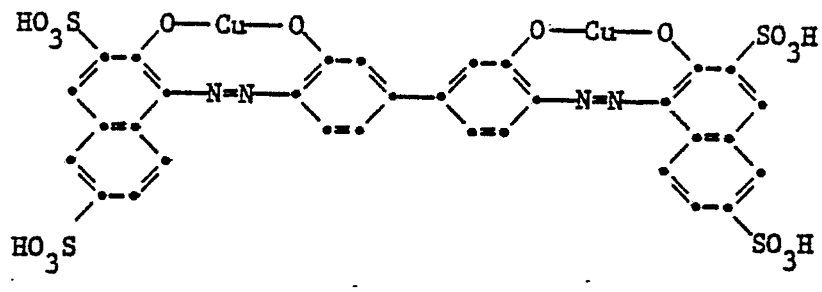

keine genügend konzentrierte lagerstabile Lösung dieses Farbstoffes herstellen, wenn man diesen in Form eines Alkalisalzes, z.B. des Lithium-, Kalium- oder Natriumsalzes wie er bei der Herstellung nach üblichen Verfahren anfällt in Wasser löst. Auch wenn man nach der Arbeitsweise der vorstehenden deutschen Offenlegungsschrift 1 794 250 verfährt, kann man keine an Farbstoff konzentrierte Flüssigformulierung erhalten. Man erhält eine Lösung mit höchstens ca. 5 oder 6 Gewichtsprozent Farbstoff.

Aufgabe der Erfindung war es nun für den genannten kupferhaltigen Disazofarbstoff eine lagerstabile, konzentrierte Flüssigformulierung herzustellen.

Die Lösung dieser Aufgabe wurde dadurch erreicht, dass man den genannten Farbstoff in Form eines Alkyl- bzw. Alkanolaminsalzes in Wasser gelöst verwendet.

Die erfindungsgemässen Formulierungen betreffen somit stabile, konzentrierte, mit Wasser in jedem Verhältnis mischbare Flüssigformulierungen kupferhaltiger Farbstoffe und sind dadurch gekennzeichnet, dass sie mindestens einen kupferhaltigen Farbstoff, der in Form der freien Säure der Formel

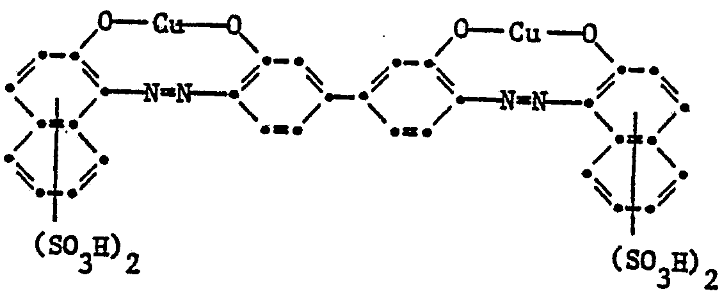

(I)

entspricht, gelöst in Wasser und so viel Alkyl- bzw. Alkanolamin, um einen pH-Wert von 6,5 bis 8,5 der Flüssigformulierung einzustellen, enthalten, wobei der Farbstoff als Alkyl- oder Alkanolaminsalz vorliegt.

Die Sulfonsäuregruppen befinden sich vor allem in den 5,7-, 6,8- und insbesondere 3,6-Stellungen.

Eine bevorzugte Ausführungsform ist dadurch gekennzeichnet, dass man einen Farbstoff der Formel

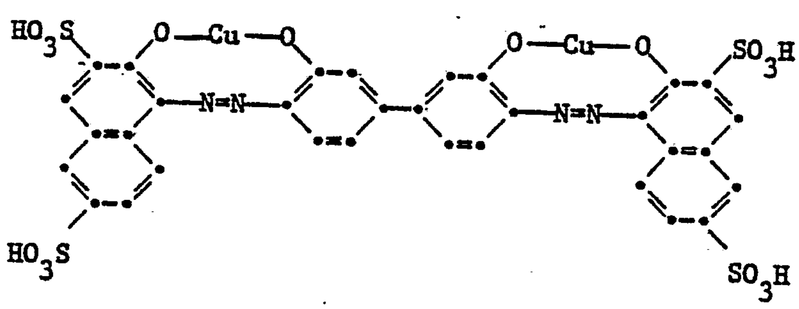

(II)

verwendet.

Die erfindungsgemässen kupferhaltigen Farbstoffe sind bekannt und können nach an sich bekannten Verfahren hergestellt werden.

Bevorzugt enthalten die erfindungsgemässen Flüssigformulierungen den Farbstoff in Mengen von 15 bis 30, insbesondere 15 bis 25 Gewichtsprozent, wobei der Farbstoff als freie Säure berechnet wird. Diese Formulierungen enthalten ausserdem 60 bis 85, insbesondere

70 bis 80 Gewichtsprozent Wasser, bezogen auf die Gesamtformulierung. Sie enthalten ausserdem ein Alkyl- oder Alkanolamin in solcher Menge, dass der pH-Wert der Formulierung ca. 6,5 bis 8,5, vorzugsweise 7 bis 8 beträgt, wobei der Farbstoff als Alkyl- oder Alkanolaminsalz vorliegt. Sie können gegebenenfalls noch weitere Zusätze in geringen Mengen enthalten.

Zur Einstellung des pH-Wertes geeignete Alkylamine sind z.B. Alkylamine mit 1 bis 6 Kohlenstoffatomen wie Methylamin und Aethylamin; geeignete Alkanolamine sind z.B. solche mit 2 bis 4 Kohlenstoffatomen pro Alkanolanteil; genannt sind in diesem Zusammenhang Aethanolamin, Diäthanolamin, n-Propanolamin und i-Propanolamin sowie Triäthanolamin, Di- und Triisopropanolamin. Bevorzugt sind Alkylamine mit 1 bis 6 Kohlenstoffatomen vor allem Aethylamin und von den Alkanolaminen vor allem Triäthanolamin und insbesondere Di- und Triisopropanolamin.

Vorzugsweise enthält die erfindungsgemässe Flüssigformulierung ca. 2 bis 10 Gewichtsprozent, insbesondere 5 bis 8 Gewichtsprozent des Alkyl- bzw. Alkanolamins.

Als weitere Zusätze können diese Flüssigformulierungen Stellmittel wie Elektrolyt (z.B. NaCl, $Na_2SO_4$); Löslichkeitsverbesserer wie Harnstoff oder Pentaerythrit; Dispergatoren; Bacteriostatica; Schaumverhütungsmittel etc. enthalten. Sie können bis ca. 3 Gewichtsprozent, vorzugsweise jedoch höchstens 1,5 Gewichtsprozent der weiteren Zusätze enthalten.

Diese neuen Flüssigformulierungen stellen echte Lösungen dar. Sie sind konzentriert an Farbstoff, besitzen eine Viskosität von etwa 20 bis 50 cP/20° C, sind lagerstabil über mehrere Monate sogar bei Temperaturen zwischen ca. -10° C und +60° C und in jedem Verhältnis mischbar mit kaltem und warmem Wasser.

Die Herstellung der erfindungsgemässen Flüssigformulierungen kann direkt aus dem Farbstoffpresskuchen erfolgen, der den Farbstoff in Form der freien Säure enthält, und erfolgt z.B. derart, dass man den definitionsgemässen kupferhaltigen Farbstoff als freie Säure entweder als getrocknete Ware oder vorzugsweise als wässrigen Presskuchen bei Raumtemperatur in Wasser gibt, und gleich anschliessend das Alkyl- bzw. Alkanolamin in solcher Menge zusetzt, dass der pH-Wert der resultierenden Lösung ca. 6,5 bis 8,5, vorzugsweise 7 bis 8 beträgt. Für den Fall, dass ein wässriger Presskuchen zum Einsatz kommt, ist es je nach Wassergehalt des Presskuchens nicht unbedingt notwendig, separat Wasser zuzusetzen.

Verwendung finden die erfindungsgemässen Flüssigformulierungen, gegebenenfalls nach dem Verdünnen mit Wasser, insbesondere zum Färben und Bedrucken von Papier, einschliesslich Halbkartons und Kartons, wobei man diese Materialien z.B. in der Masse, durch Streichen oder durch Tauchen färben kann. Im übrigen können derartige Flüssigformulierungen auch für ein kontinuierliches oder diskontinuierliches Färbeverfahren für Textilmaterialien, insbesondere Zellulose und Polyamid, eingesetzt werden.

Die folgenden Beispiele veranschaulichen die Erfindung. "SR" bedeutet "Schopper Riegler" und "atro" bedeutet "absolut trocken"; %-Angaben bedeuten, sofern nichts anderes angegeben ist, Gewichtsprozente.

Beispiel 1: 600 g des wässrigen Presskuchens, enthaltend ca. 20 g Elektrolyt (NaCl, $Na_2SO_4$), 425 g Wasser und 155 g des Farbstoffes der Formel

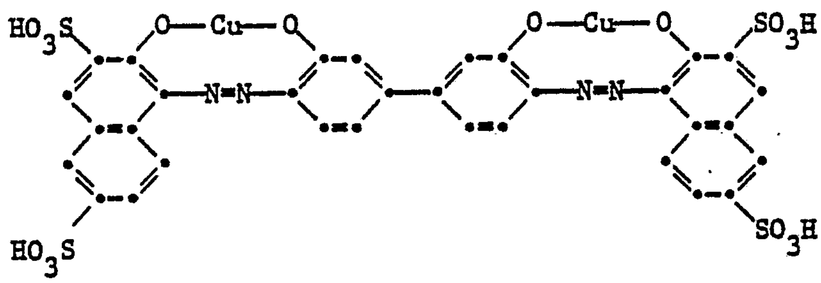

in Form der freien Säure werden in 300 g Wasser dispergiert. Gleich anschliessend wird das pH der viskosen Paste mit ca. 70 g Triisopropanolamin auf 7 bis 8 eingestellt, wobei eine Lösung resultiert, die man noch ca. 2 Stunden bei Raumtemperatur weiterrührt. Zum Schluss wird durch ein Stahlsieb filtriert, um eventuell vorhandene Verunreinigungen zu entfernen. Man erhält eine echte Farbstofflösung mit einer Viskosität von ca. 40 cP bei 20° C, bestehend aus 23 % des obengenannten Farbstoffes als Triisopropanolaminsalz (bestehend aus ca. 16 % freie Farbstoffsäure und 7 % Triisopropanolamin), 75 % Wasser und 2 % Elektrolyt (NaCl, $Na_2SO_4$). Diese Farbstofflösung ist während mehreren Monaten bei Temperaturen von -10° C bis +40° C stabil, und mit Wasser in jedem Verhältnis mischbar. Sie eignet sich nach dem Verdünnen mit Wasser zum Färben von Papier. Um die Lagerstabilität noch zu erhöhen, kann man den Farbstoffpresskuchen mit einer 1 %igen Salzsäurelösung vorwaschen, um die Menge an Elektrolyt zu reduzieren.

(Beispiele 2 bis 4):

Verfährt man gemäss der Arbeitsweise des vorstehenden Beispiels 1, verwendet jedoch die in den folgenden Beispielen 2 bis 4 genannten Komponenten, so erhält man Farbstofflösungen der in diesen Beispielen genannten Zusammensetzung, die ähnliche Eigenschaften aufweisen.

Beispiel 2:

Mengen der eingesetzten Komponenten:

| | | |
|---|---|---|
| 600 | g | des in Beispiel 1 angegebenen wässrigen Presskuchens, |
| 25 | g | Aethylamin, |
| 375 | g | Wasser. |

Zusammensetzung der konzentrierten Farbstofflösung:

| | |
|---|---|
| 15,5 | Gewichtsprozent Farbstoff (berechnet auf freie Säure), |
| 2,5 | Gewichtsprozent Aethylamin, |
| 2 | Gewichtsprozent Elektrolyt, |
| ca. 80 | Gewichtsprozent Wasser. |

Beispiel 3:

Mengen der eingesetzten Komponenten:

| | | |
|---|---|---|
| 600 | g | des in Beispiel 1 angegebenen wässrigen Presskuchens, |
| 60 | g | Triäthanolamin, |
| 340 | g | Wasser. |

Zusammensetzung der konzentrierten Farbstofflösung:

| | |
|---|---|
| 15,5 | Gewichtsprozent Farbstoff (berechnet auf freie Säure), |
| 6 | Gewichtsprozent Triäthanolamin, |
| 2 | Gewichtsprozent Elektrolyt, |
| 76,5 | Gewichtsprozent Wasser. |

Beispiel 4:

Mengen der eingesetzten Komponenten:

| | | |
|---|---|---|
| 600 | g | des in Beispiel 1 angegebenen wässrigen Presskuchens, |
| 40 | g | Diisopropanolamin, |
| 360 | g | Wasser. |

Zusammensetzung der konzentrierten Farbstofflösung:
ca. 16 Gewichtsprozent Farbstoff (berechnet auf freie Säure),
4 Gewichtsprozent Diisopropanolamin,
2 Gewichtsprozent Elektrolyt,
ca. 78 Gewichtsprozent Wasser.

Wenn man das Diisopropanolamin durch 20 g n-Propanolamin oder Isopropanolamin ersetzt, erhält man ähnlich stabile, konzentrierte Lösungen des Farbstoffs.

Beispiel 5: Druckpapier

800 kg Sulfatcellulose gebleicht und 200 kg Sulfitcellulose gebleicht, werden in der angelieferten Form in einen Pulper, in dem 14 cbm Fabrikationswasser vorgelegt sind, eingetragen und bis zur Stippenfreiheit aufgeschlagen. Der Aufschlagvorgang benötigt 30 Minuten. Anschliessend wird der aufgeschlagene Zellstoff in eine Ableerbütte überführt. Aus der Ableerbütte wird die Zellstoffsuspension mit Stoffmühlen auf einen Mahlgrad von 25° SR gemahlen und gelangt anschliessend in eine Mischbütte. In der Mischbütte erfolgen als weitere Zusätze 250 kg Kaolin Ia (als Füllstoff) sowie 0,1 bis 0,05 % der Farbstoff-Formulierung gemäss Beispiel 1, berechnet auf atro Faser. Nach 15 Minuten Aufziehzeit werden 2 % Harzleim, berechnet auf atro Cellulose, sowie nach 10 Minuten 4 % Alaun, berechnet auf atro Cellulose, zugefügt. Dieser Papierstoff gelangt über den üblichen Prozessablauf auf die Papiermaschine. Man erhält ein blau gefärbtes Druckpapier.

Beispiel 6: Tissuepapier

1000 kg Sulfatcellulose gebleicht, werden in der angelieferten Form in einen Pulper, in dem 14 cbm Fabrikationswasser vorgelegt sind, eingetragen und bis zur Stippenfreiheit aufgeschlagen. Der Aufschlagvorgang benötigt 30 Minuten. Anschliessend wird der aufgeschlagene Stoff in eine Ableerbütte überführt. Aus der Ableerbütte wird der Zellstoff mit Stoffmühlen auf einen Mahlgrad von 25° SR gemahlen und gelangt anschliessend in eine Mischbütte. In der Mischbütte erfolgt die Zugabe von 0,1 bis 0,05 % Farbstoff-Formulierung gemäss Beispiel 1, bezogen auf atro Faser. Nach 15 Minuten Aufziehzeit gelangt dieser Papierstoff über den üblichen Prozessablauf auf die Papiermaschine. Man erhält ein blau gefärbtes Tissuepapier.

Beispiel 7: Leimpresse-Applikation

In 1000 l einer 10%igen wässrigen, anionischen Stärkelösung (lösliche Stärke, die oxydativ aufgeschlossen ist) werden 5 kg Farbstoff in Form einer wässrigen Formulierung gemäss Beispiel 1 gelöst und via Leimpresse auf eine Papierbahn appliziert. Der Auftrag obiger Lösung beträgt 1,5 $g/m^2$ atro je Seite. Man erhält ein blau gefärbtes Papier.

Patentansprüche

1. Stabile, konzentrierte, mit Wasser in jedem Verhältnis mischbare Flüssigformulierungen kupferhaltiger Farbstoffe, dadurch gekennzeichnet, dass sie mindestens 15 Gewichtsprozent eines Farbstoffes der in Form der freien Säure der Formel

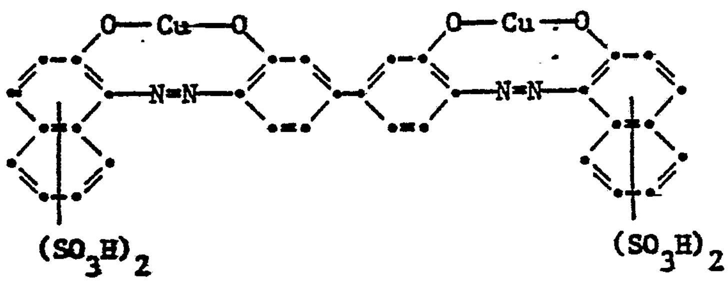

(I)

entspricht, gelöst in Wasser und soviel Alkyl- bzw. Alkanolamin, um einen pH-Wert von 6,5 bis 8,5 der Flüssigformulierung einzustellen, enthalten, wobei der Farbstoff als Alkyl- oder Alkanolaminsalz vorliegt.

2. Flüssigformulierungen gemäss Anspruch 1, dadurch gekennzeichnet, dass sie aus 15 bis 30, vorzugsweise 15 bis 25 Gewichtsprozent des Farbstoffes, berechnet als freie Säure gelöst in 60 bis 85, vorzugsweise 70 bis 80 Gewichtsprozent Wasser und soviel Alkyl- bzw. Alkanolamin um die Lösung auf einen pH-Wert von 6,5 bis 8,5 einzustellen sowie gegebenenfalls weiteren Zusätzen bestehen.

3. Flüssigformulierungen gemäss den Ansprüchen 1 und 2, dadurch gekennzeichnet, dass diese als Alkylamin solche mit 1 bis 6 Kohlenstoffatomen enthalten.

4. Flüssigformulierungen gemäss den Ansprüchen 1 und 2,dadurch gekennzeichnet, dass diese als Alkanolamin solche mit 1 bis 4 Kohlenstoffatomen pro Alkanolanteil enthalten.

5. Flüssigformulierungen gemäss Anspruch 4,dadurch gekennzeichnet, dass diese Triäthanolamin, Diisopropanolamin oder Triisopropanolamin enthalten.

6. Flüssigformulierungen gemäss Anspruch 5, dadurch gekennzeichnet, dass sie den kupferhaltigen Farbstoff in Form des Triisopropanolaminsalzes enthalten.

7. Flüssigformulierungen gemäss den Ansprüchen 1 bis 6, dadurch gekennzeichnet, dass sie als Farbstoff einen Farbstoff der Formel I, in der die Sulfonsäuregruppen sich in den 5,7-, 6,8- oder vorzugsweise in 3,6-Stellungen befinden, enthalten.

8. Flüssigformulierungen gemäss den Ansprüchen 1 bis 7, dadurch gekennzeichnet, dass sie als Farbstoff einen Farbstoff der Formel

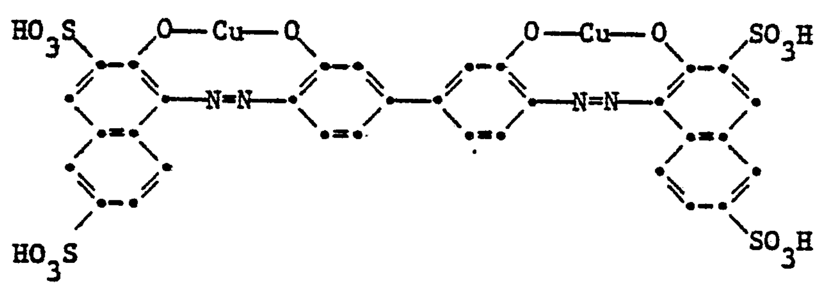

enthalten.

9. Flüssigformulierungen gemäss den Ansprüchen 1 bis 8, dadurch gekennzeichnet, dass sie als weitere Zusätze Elektrolyt, Bacteriostatika, und/oder Schaumverhütungsmittel enthalten.

10. Verfahren zur Herstellung der Flüssigformulierungen gemäss den Ansprüchen 1 bis 9, dadurch gekennzeichnet, dass man mindestens einen Farbstoff der in Anspruch 1 angegebenen Formel I als freie Säure in Form des wässrigen Presskuchens bei Raumtemperatur in Wasser gibt und gleich anschliessend Alkyl- bzw. Alkanolamin in solcher Menge zusetzt, dass der pH-Wert der resultierenden Lösung ca. 6,5 bis 8,5 ist.

11. Verwendung der Flüssigformulierungen gemäss den Ansprüchen 1 bis 9 bzw. erhalten gemäss dem Verfahren des Anspruchs 10 zum Färben und Bedrucken von Cellulose und Polyamid, insbesondere von Papier.